# EUROPÄISCHE PATENTANMELDUNG

(11) **EP 2 495 627 A1**
(43) Veröffentlichungstag der Anmeldung: **05.09.2012**
(21) Anmeldenummer: 11156441.5
(22) Anmeldetag: 01.03.2011
(51) Int. Cl.: G05B 19/409, G05B 19/4061

(54) **Verfahren zum Betreiben eines mobilen Bediengeräts sowie mobiles Bediengerät**

(71) Anmelder: Siemens Aktiengesellschaft, 80333 München (DE)
(72) Erfinder: Lüder, Stefan, 76137, Karlsruhe (DE); Weiler, Christoph, 75015, Bretten (DE)

(57) **Zusammenfassung**

Die Erfindung betrifft ein mobiles Bediengerät (4) sowie ein Verfahren zum Betreiben eines mobilen Bediengeräts (4) für eine Maschine (1) in einer technischen Anlage. Um eine eindeutige Zuordnung des Bediengeräts (4) zur jeweils zu bedienenden Maschine (1) zu gewährleisten, wird sichergestellt, dass sich das Bediengerät (4) bei Bedieneingriffen innerhalb eines vorbestimmten Bedienbereichs (2) befindet. Die dazu erforderliche Ortung des Bediengeräts wird zumindest zeitweise mit Hilfe eines Inertialsensors (44) durchgeführt. Dadurch können die Nachteile einer funkbasierten Ortung vermieden werden, die in technischen Anlagen typischerweise durch Mehrwegeausbreitung der Signale gestört wäre und aufgrund des ständigen Betriebs eines Empfängers vergleichweise stark die Batterie des Bediengeräts (4) belasten würde. Indem das Bediengerät (4) von Zeit zu Zeit zur Aufnahme eines Referenzpunkts an eine Station (5) mit bekannten absoluten Koordinaten gebracht wird, kann die Genauigkeit des Ortungsverfahrens, das zumindest zeitweise ausschließlich auf der Basis des Inertialsensors (44) arbeitet, verbessert werden.

## Beschreibung

Die Erfindung betrifft ein Verfahren zum Betreiben eines mobilen Bediengeräts für eine Maschine in einer technischen Anlage gemäß dem Oberbegriff des Anspruchs 1 sowie ein mobiles Bediengerät gemäß dem Oberbegriff des Anspruchs 6, welches nach einem derartigen Verfahren betreibbar ist.

Aus der EP 1 525 519 B1 ist bereits ein Bediengerät bekannt, welches beispielsweise zur Bedienung einer Maschine in einer technischen Anlage geeignet ist. Einem Bediener wird damit die Möglichkeit gegeben, in den Prozessablauf der technischen Anlage einzugreifen, beispielsweise um diesen zur Verbesserung der erzielten Ergebnisse geeignet zu steuern oder um bei sicherheitskritischen Applikationen Noteingriffe zu ermöglichen. Zum Beispiel kann sich auf einem derartigen mobilen Bediengerät ein Notausschalter befinden, durch dessen Betätigung die Maschine im Gefahrenfall deaktiviert wird. Damit kein bei der Handhabung des mobilen Bediengeräts hinderliches Kabel benötigt wird, erfolgt die Kommunikation zwischen dem mobilen Bediengerät und der Maschine über eine drahtlose Verbindung, ein Wireless Local Area Network (WLAN). Unter dem Begriff "Bediengerät" wird im Folgenden ein Gerät beliebiger Art verstanden, welches zur Bedienung der Maschine geeignet ist, zum Beispiel ein so genanntes Panel, ein Laptop, ein Personal Digital Assistant (PDA) oder ein Mobiltelefon. Bei der Maschine kann es sich in einer technischen Anlage zum Beispiel um einen Industrieroboter, eine Fördereinrichtung, eine Fertigungspresse oder ein sonstiges beliebiges, durch ein Gerät bedienbares Teil der Anlage handeln. Dabei bringt die durch die drahtlose Kommunikationsverbindung erreichte Ortsungebundenheit die Gefahr mit sich, dass sich ein Bediener von der jeweils zu bedienenden Maschine räumlich vergleichsweise weit entfernt, so dass bei dem jeweiligen Bedieneingriff eine unmittelbare Einsichtnahme auf die Maschine nicht mehr gewährleistet ist. Dies kann zu einer der jeweiligen Anlagensituation nicht angemessenen Reaktion des Bedieners oder sogar zu einer Fehlbedienung führen. Es muss daher sichergestellt werden, dass sich das Bediengerät bei Vornahme von Bedieneingriffen in unmittelbarer Umgebung der betreffenden Maschine befindet. Zudem können Bediengeräte in technischen Anlagen zur Bedienung verschiedener Maschinen eingesetzt werden. Damit aus einer falschen Zuordnung des bedienten Geräts zu einer Maschine keine unbeabsichtigten Bedieneingriffe resultieren, ist eine eindeutige Zuordnung des Bediengeräts zur jeweils zu bedienenden Maschine erforderlich.

Zur Lösung dieses Problems können beispielsweise das Bediengerät und die technische Anlage um eine Vorrichtung zur Präsenzdetektion des Bediengeräts erweitert werden. Hierzu können in der technischen Anlage beispielsweise Funkbarken installiert werden, die kontinuierlich ein definiertes Signal aussenden. Im Bediengerät befindet sich dann ein Empfänger für die Signale der Funkbarken. Ist der Empfang einzelner, einem vorbestimmten Bedienbereich einer Maschine zugeordneter Funkbarken möglich, befindet sich das Bediengerät mit hoher Wahrscheinlichkeit innerhalb des Bedienbereichs und die Bedienung der Maschine durch das Bediengerät kann freigeschaltet werden. Zudem kann durch Auswertung mehrerer Empfangssignale mit einer gewissen Genauigkeit die Position des Bediengeräts bestimmt werden. Die beschriebene Lösung des Problems ist zum einen vergleichsweise teuer, da in einer größeren technischen Anlage eine Vielzahl von Funkbarken benötigt werden, und es können Koexistenzprobleme beispielsweise mit einer im Bediengerät vorhandenen WLAN-Schnittstelle zur Kommunikation innerhalb eines Automatisierungsnetzwerks auftreten, da unter Umständen das gleiche Frequenzband für die Kommunikation und für die Präsenzdetektion genutzt wird. Da das Bediengerät seine Betriebsenergie aus einer Batterie bezieht, ist zudem die Leistungsaufnahme des Empfängers für die Signale der Funkbarken problematisch, da dieser ständig aktiv sein muss.

Eine weitere Möglichkeit zur Lösung des oben genannten Problems kann darin gesehen werden, dass um den vorbestimmten Bedienbereich der Maschine herum ein Sicherheits-Lichtvorhang installiert wird, dessen Lage mittels gelber Linie auf dem Fußboden optisch markiert ist. Sobald sich ein Bediener mit einem zur Bedienung der jeweiligen Maschine angemeldeten und freigeschalteten Bediengerät aus der vordefinierten Bedienzone heraus bewegt, wird dies durch den Lichtvorhang detektiert und ein entsprechender Alarm ausgelöst. Nachteilig ist wiederum der vergleichsweise hohe Aufwand, der mit der Installation eines geeigneten Lichtvorhangs verbunden ist.

Der Erfindung liegt die Aufgabe zugrunde, ein Verfahren zum Betreiben eines mobilen Bediengeräts für eine Maschine in einer technischen Anlage zu finden und ein gemäß dem Verfahren betreibbares mobiles Bediengerät zu schaffen, welche mit vergleichweise einfachen Mitteln eine eindeutige Zuordnung des Bediengeräts zur jeweils zu bedienenden Maschine ermöglichen, so dass bereits mit geringem Aufwand eine hohe Betriebssicherheit bei der Maschinenbedienung erreicht werden kann.

Zur Lösung dieser Aufgabe weist das neue Verfahren zum Betreiben eines mobilen Bediengeräts für eine Maschine in einer technischen Anlage die in Anspruch 1 angegebenen Merkmale auf. In den abhängigen Ansprüchen sind vorteilhafte Weiterbildungen des Verfahrens, in Anspruch 6 ein mobiles Bediengerät, welches nach dem neuen Verfahren betreibbar ist, beschrieben.

Die Erfindung hat den Vorteil, dass mit vergleichsweise geringem Aufwand überprüfbar ist, ob sich das Bediengerät innerhalb eines vorbestimmten Bedienbereichs der Maschine befindet oder nicht. Der zur Ortung des Bediengeräts verwendete Inertialsensor zeichnet sich durch eine hohe Genauigkeit bei der Positionsverfolgung des mobilen Bediengeräts aus und unterliegt nicht den Störungen funkbasierter Ortungsverfahren, die üblicherweise auf der Basis einer Auswertung von Empfangspegeln oder von Laufzeiten von Funksignalen arbeiten.

Inertialsensoren messen translatorische und/oder rotatorische Beschleunigungskräfte, die zur Berechnung der aktuellen Position des Bediengeräts ausgewertet werden. Sie ermöglichen die Erfassung komplexer und mehrachsiger Bewegungsvorgänge mit bis zu 6 Freiheitsgraden. Werden beispielsweise drei orthogonal angeordnete Beschleunigungssensoren als Translationssensoren verwendet, so kann mit diesen die translatorische Bewegung des mobilen Bediengeräts beispielsweise in einem kartesischen Koordinatensystem berechnet werden. Insbesondere mikromechanisch gefertigte Inertialsensoren zeichnen sich durch eine hohe Genauigkeit bei sehr geringem Energieverbrauch aus. Es ist daher bereits von erheblichem Vorteil für die erreichbare maximale Betriebsdauer eines mobilen, batteriebetriebenen Bediengeräts, wenn ein für ein herkömmliches Ortungsverfahren genutzter Empfänger zumindest zeitweise abgeschaltet und während dieser Zeit die Ortungsaufgabe durch eine Positionsverfolgung mit Hilfe des Inertialsensors erfüllt werden kann.

In vorteilhafter Weise können die Nachteile der herkömmlichen, funkbasierten Ortungsverfahren, bei welchen die Empfangsleistung oder die Signallaufzeit ausgewertet wird und deren Ergebnisse sehr stark durch eine im Bereich technischer Anlagen häufig vorkommende Mehrwegeausbreitung der Funksignale verfälscht wird, vollständig vermieden werden, wenn das mobile Bediengerät zur Durchführung der Ortung an einer vorbestimmten Position einen Referenzpunkt abspeichert und mit Hilfe des Inertialsensors die relative Verschiebung seiner Lage gegenüber der vorbestimmten Position berechnet. In diesem Fall kann auf eine Funkortung völlig verzichtet werden, da die absolute Position des mobilen Bediengeräts ausschließlich mit Hilfe des Inertialsensors berechnet wird.

Inertialsensoren erfassen dynamische Veränderungen der jeweiligen Position sehr gut, haben jedoch den Nachteil, dass insbesondere im Ruhezustand die auf der Basis von Beschleunigungen berechneten Koordinatenwerte wegen der dazu durchgeführten Integration mit der Zeit driften. Ursache dafür sind beispielsweise kleine Offset-Fehler des Sensors. Deshalb ist es vorteilhaft, wenn die Algorithmen der Positionsbestimmung auf dem mobilen Bediengerät nach Ablauf einer vorbestimmten Zeit erneut die Information über die tatsächliche absolute Position des Bediengeräts erhalten. Dies kann in einfacher Weise dadurch unterstützt werden, dass immer dann ein Signal an einen Bediener ausgegeben wird, wenn seit der Abspeicherung des zuletzt aufgenommenen Referenzpunkts eine vorbestimmte Maximalzeit überschritten wird. Der Bediener erhält so eine Aufforderung zur erneuten Aufnahme eines Referenzpunktes. Bei der erneuten Aufnahme des Referenzpunkts kann gleichzeitig ein Abgleich zur Kalibrierung des Inertialsensors durchgeführt werden. Dazu wird das Bediengerät vorteilhaftbeispielsweise kurz auf einen Podest abgelegt, so dass während der Kalibrierung keine Beschleunigungen auf den Inertialsensor wirken. Auf diese Weise kann die Genauigkeit des Verfahrens zur Ortung des mobilen Bediengeräts weiter verbessert werden.

Soll das Bediengerät in einem größeren Bereich zur Bedienung der Maschine freigeschaltet werden oder soll es für Bedienpersonal einfacher sein, schnell an einen Referenzpunkt zur erneuten Abspeicherung eines vorbekannten Absolutwerts der Position zu gelangen, so können in vorteilhafter Weise mehrere verschiedene Positionen zur Referenzpunktaufnahme in einem vorbestimmten Bedienbereich vorgesehen werden.

Zur Identifikation des jeweiligen Referenzpunkts, dessen absolute Position dem mobilen Bediengerät vorbekannt ist oder die an das mobile Bediengerät übertragen wird, können prinzipiell verschiedene Übertragungstechnologien Anwendung finden, zum Beispiel ein Barcode am Referenzpunkt und ein Barcodeleser am mobilen Bediengerät, so genannte Radio Frequency Identification (RFID), eine Near Field Communication (NFC) oder eine Infrarot-Schnittstelle. Mittels dieser Kommunikation wird die Information an das mobile Bediengerät übertragen, an welcher Referenzposition es sich gerade befindet. Als eine mit besonders geringem Aufwand realisierbare Möglichkeit hat es sich erwiesen, an der jeweiligen Referenzposition einen so genannten RFID-Transponder anzubringen, der mit Hilfe einer geeigneten Leseeinrichtung des mobilen Bediengeräts ausgelesen wird, so dass dieses die der jeweiligen Referenzposition zugeordneten absoluten Koordinaten beispielsweise aus einem Speicher als seine neue absolute Position übernimmt.

Anhand der Zeichnungen, in denen Ausführungsbeispiele der Erfindung dargestellt sind, werden im Folgenden die Erfindung sowie Ausgestaltungen und Vorteile näher erläutert.

Es zeigen:
- Figur 1: eine Maschine mit einem Bedienbereich auf einer Seite,
- Figur 2: eine Maschine mit einem rundum angeordneten Bedien-bereich und
- Figur 3: ein Blockschaltbild eines Bediengeräts.

In den Figuren sind gleiche Teile mit gleichen Bezugszeichen versehen.

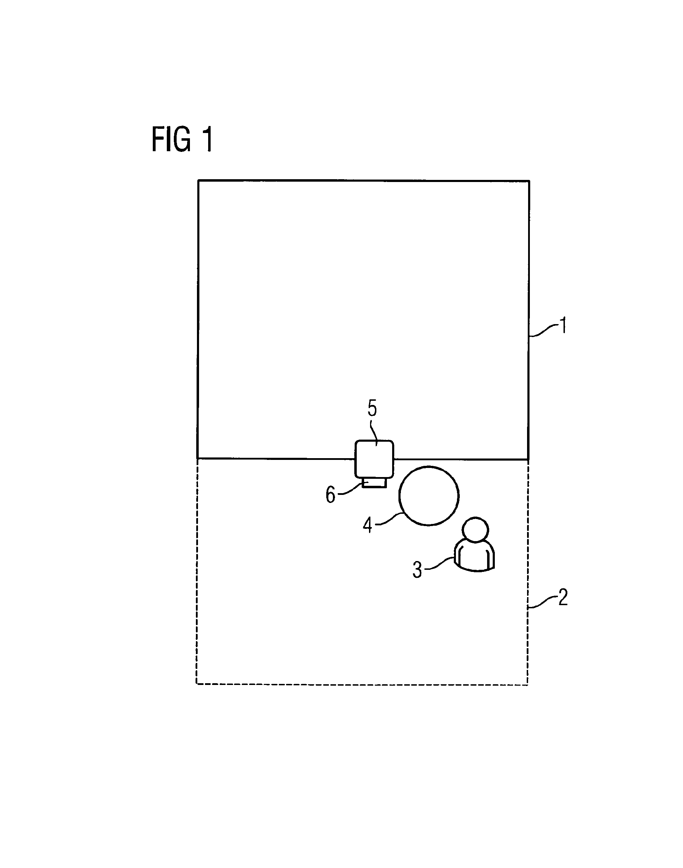

In Figur 1 ist eine Maschine 1 dargestellt, die nur von ihrer Vorderseite aus bedient werden kann. Ein definierter Bedienbereich 2, der mit durchbrochenen Linien angedeutet ist, befindet sich dementsprechend vor der Maschine 1. Bei der Maschine 1 kann es sich beispielsweise um eine Fertigungspresse handeln, die einen Teil einer nicht weiter dargestellten technischen Anlage bildet. Ein Bediener 3, der ein mobiles Bediengerät 4 trägt, meldet sich vor Bedienung der Maschine 1 mittels des Bediengeräts 4 zunächst an einer Anmeldevorrichtung 5 an. Die Anmeldevorrichtung 5 ist mit einem RFID-Transponder 6 versehen, dessen Kennung durch das Bediengerät 4 ausgelesen wird. Befindet sich das Bediengerät 4 in unmittelbarer Nähe des RFID-Transponders 6, beispielsweise in einem Abstand von weniger als 10 cm, so wird die bekannte absolute Position des RFID-Transponders 6, die anschließend als Referenzpunkt für die Ortung des Bediengeräts 4 dient, in dem Bediengerät 4 als dessen aktuelle Position abgespeichert. Der Anmeldevorgang erfolgt durch Kommunikation des Bediengeräts 4 mit beispielsweise einer Leitstation der technischen Anlage, welche in Figur 1 nicht dargestellt ist. Zur Kommunikation wird beispielsweise ein WLAN genutzt. Nach Anmelden des Bediengeräts 4 wird dieses für die Bedienung der Maschine 1 freigeschaltet. Die Bedienung ist jedoch nur so lange möglich, wie sich der Bediener 3 mit dem Bediengerät 4 in dem vorbestimmten Bedienbereich 2 befindet. Damit das Bediengerät 4 auch dann geortet werden kann, wenn es sich nicht mehr unmittelbar bei der Anmeldevorrichtung 5 befindet, ist es mit einem Inertialsensor ausgestattet. Mittels Beschleunigungs-und Winkelmesswerten und mit den bekannten Koordinaten des Referenzpunkts bei der Anmeldevorrichtung 5 wird die aktuelle absolute Position des Bediengeräts 4 immer wieder neu berechnet und überprüft, ob dieses sich noch innerhalb des definierten Bedienbereichs 2 befindet. Wird der Bedienbereich 2 durch das Bediengerät 4 verlassen, so erfolgt eine Sperrung des Bediengeräts 4 für eine weitere Bedienung der Maschine 1. Die Sperrung kann in einer Ausführungsform durch die Leitstation, an welche das Bediengerät 4 über WLAN seine aktuelle Position ständig meldet, in einer anderen durch das Bediengerät 4 selbst durchgeführt werden, wenn dieses die Prüfung, ob es sich noch innerhalb des vorbestimmten Bedienbereichs 2 der Maschine 1 befindet, selbst durchführt.

Wenn das mobile Bediengerät 4 von der Anmeldevorrichtung 5, die mit einer Halterung für dieses versehen ist, entnommen wird, aktiviert das Bediengerät 4, wie bereits oben erläutert, seinen Inertialsensor zu seiner Positionsverfolgung. Diese funktioniert mit hoher Genauigkeit und unterliegt nicht den Störungen, mit welchen Ortungsverfahren in Funknetzwerken behaftet sind, die auf der Basis einer Auswertung des Empfangspegels oder der Signallaufzeiten arbeiten. Da Inertialsensoren jedoch den Nachteil haben, dass die mit Hilfe von Beschleunigungssignalen berechneten Positionswerte sich durch Driften mit der Zeit immer mehr von der jeweils tatsächlichen Position entfernen, ist es vorteilhaft, wenn nach einer vorbestimmten Maximalzeit erneut eine Aufnahme eines absoluten Referenzpunkts durchgeführt wird. Durch einen Signalton und ein Blinklicht wird der Bediener 3 darauf aufmerksam gemacht, so dass er rechtzeitig das mobile Bediengerät 4 wieder zur Anmeldevorrichtung 5 bringen und dieses weiterhin mit der erforderlichen Genauigkeit arbeiten kann.

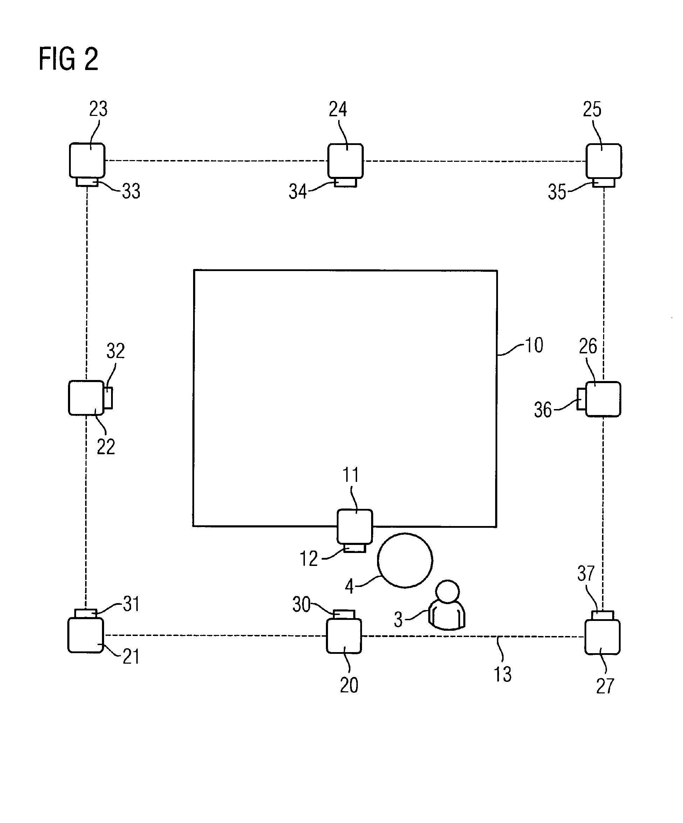

Figur 2 zeigt ein Ausführungsbeispiel mit einer Maschine 10, beispielsweise einem sechsachsigen Industrieroboter als weiteren Teil der technischen Anlage, die ebenfalls durch das mobile Bediengerät 4 bedient werden kann. Hier muss der Bediener 3 das Bediengerät 4 zur Durchführung des Anmeldevorgangs zunächst auf eine Anmeldevorrichtung 11 legen, die mit einem RFID-Transponder 12 versehen ist. Das Betriebsverfahren, welches hier für das Bediengerät 4 zur Anwendung kommt, entspricht im Wesentlichen dem bereits anhand von Figur 1 beschriebenen, jedoch mit dem Unterschied, dass ein vorbestimmter Bedienbereich 13 eine Bedienung der Maschine 10 von allen Seiten zulässt. Beim Anmeldevorgang wird automatisch der Bedienbereich 13 zur Durchführung der Prüfung, ob sich das Bediengerät 4 innerhalb des Bedienbereichs 13 befindet, ausgewählt. Damit sich der Bediener 3 nicht jedes Mal, wenn eine erneute Aufnahme eines Referenzpunktes notwendig ist, zur Anmeldevorrichtung 11 begeben muss, sind um die Maschine 10 herum weitere Stationen 20...27 installiert, die jeweils mit einem RFID-Transponder 30, 31, 32, 33, 34, 35, 36 bzw. 37 versehen sind. Zeigt das Bediengerät 4 durch ein Signal an, dass eine neue Referenzpunktaufnahme durchgeführt werden soll, kann dies zur Verkürzung der Wege ebenfalls an jeder dieser weiteren Stationen 20...27 erfolgen. Anhand der RFID-Transponder 30...37 wird die jeweilige Station identifiziert, so dass die dieser zugehörige, vorbekannte Position als neuer absoluter Referenzpunkt zur Verbesserung der Genauigkeit der Positionsverfolgung des mobilen Bediengeräts 4 übernommen werden kann.

Die Verwendung von RFID-Transpondern 12 und 30...37 hat den Vorteil, dass diese vergleichsweise günstig sind und ohne eigene Batterie betrieben werden können. Im Vergleich zur eingangs beschriebenen Alternative mit einem Lichtvorhang oder mit Funkbarken ist die hier verwendete Infrastruktur sehr kostengünstig. Das Lesegerät, welches im mobilen Bediengerät 4 für das Auslesen der in den RFID-Transpondern jeweils hinterlegten Identifikationskennung benötigt wird, muss lediglich bei der Aufnahme eines absoluten Referenzpunkts aktiviert werden und kann in der übrigen Zeit abgeschaltet bleiben, so dass es die Batterie des mobilen Bediengeräts 4 kaum belastet.

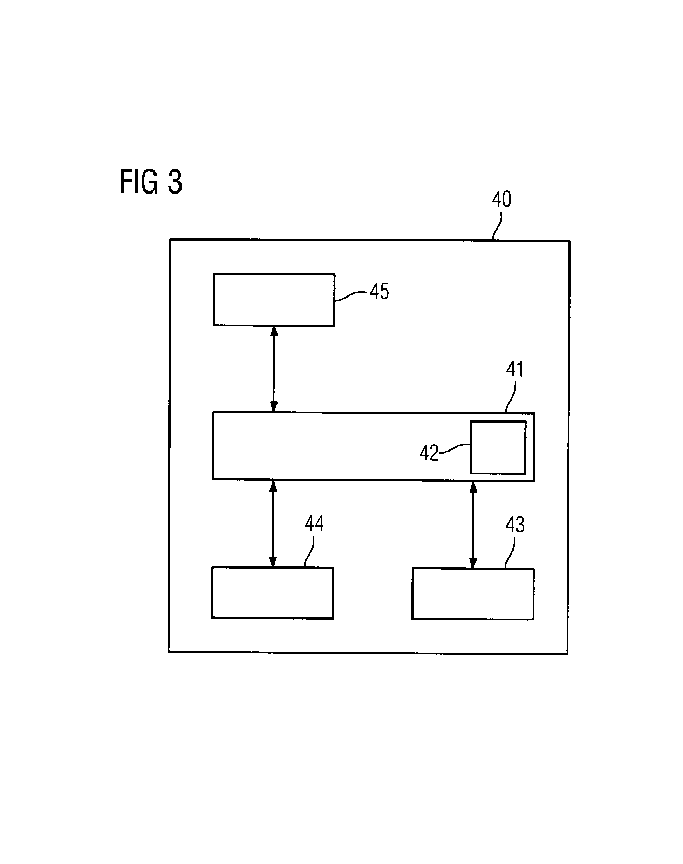

Figur 3 zeigt den prinzipiellen Aufbau eines Bediengeräts 40 mit den Teilen, die im Zusammenhang mit der vorliegenden Erfindung Verwendung finden. Weitere Teile, wie beispielsweise Tastatur, Anzeige, Batterie, WLAN-Schnittstelle usw., welche denen herkömmlicher Bediengeräte entsprechen, sind der Übersichtlichkeit wegen nicht dargestellt. In dem gezeigten Ausführungsbeispiel handelt es sich um ein mikroprozessorbasiertes Bediengerät 40, dessen zentralen Bestandteil somit ein Mikroprozessor 41 bildet. Dieser weist einen Speicher 42 auf, in welchem applikationsspezifische Daten, wie beispielsweise die vorbekannten Koordinaten der verschiedenen Referenzpunkte, die verschiedenen Identifikationskennungen der RFID-Transponder, die Grenzen der vorbestimmten Bedienbereiche usw., hinterlegt sind. Zur Identifikation der jeweiligen Station, an welcher ein Referenzpunkt aufgenommen wird, ist das Bediengerät 40 mit einem RFID-Lesegerät 43 ausgestattet, welches durch den Bediener oder automatisch aktivierbar ist. Weiterhin besitzt das Bediengerät 40 einen Inertialsensor 44, welcher Beschleunigungsmesssignale an den Mikroprozessor 41 übergibt, der wiederum diese zur Berechnung der aktuellen Position des Bediengeräts 40 auswertet. Der Mikroprozessor 41 ist durch ein geeignetes Programm somit dazu ausgebildet, die Ortung des Bediengeräts 40 zumindest zeitweise mit Hilfe des Inertialsensors 44 durchzuführen. Anhand der berechneten Positionsdaten überprüft der Mikroprozessor 41 weiterhin, ob sich das Bediengerät innerhalb des vorbestimmten Bedienbereichs (siehe Bezugszeichen 2 in Figur 1 bzw. 13 in Figur 2) befindet, so dass es derart betrieben werden kann, dass es zur Bedienung der jeweiligen Maschine (siehe Bezugszeichen 1 in Figur 1 bzw. 10 in Figur 2) nur dann freigeschaltet wird, wenn es sich innerhalb des jeweiligen Bedienbereichs befindet. Die Freischaltung kann dabei in einer Leitstation der technischen Anlage, in welcher das Bediengerät 40 eingesetzt wird, oder im Bediengerät 40 selbst gesteuert werden. Sobald wegen der Drift, mit welcher das mit Hilfe des Inertialsensors 44 durchgeführte Verfahren zur Ortung des Bediengeräts 40 behaftet ist, eine erneute Aufnahme eines Referenzpunkts erfolgen sollte, wird dies einem Bediener durch einen Signalton angezeigt, der über einen Lautsprecher 45 ausgegeben wird.

Das Bediengerät 40 ist insbesondere für sicherheitskritische Anwendungen in der Automatisierungstechnik einsetzbar. Durch den Inertialsensor 44 ist kein funkbasiertes Ortungsverfahren erforderlich, welches hier den Nachteil hätte, dass die Positionsbestimmung sehr stark durch Mehrwegeausbreitung, die für Umgebungen in der Automatisierungstechnik typisch ist, verfälscht würde.

## Patentansprüche

1. Verfahren zum Betreiben eines mobilen Bediengeräts (4) für eine Maschine (1) in einer technischen Anlage,
wobei durch ein Ortungsverfahren die aktuelle Position des Bediengeräts ermittelt wird,
wobei geprüft wird, ob sich das Bediengerät innerhalb eines vorbestimmten Bedienbereichs (2) der Maschine befindet, und wobei das Bediengerät (4) nur innerhalb des Bedienbereichs zur Bedienung der Maschine freigeschaltet wird,
**dadurch gekennzeichnet,**
**dass** die Ortung des Bediengeräts zumindest zeitweise mit Hilfe eines Inertialsensors (44) des Bediengeräts durchgeführt wird.

2. Verfahren nach Anspruch 1, **dadurch gekennzeichnet, dass** das Bediengerät (4) zur Bestimmung seiner aktuellen Position vorbekannte Koordinaten eines zuvor aufgenommenen Referenzpunkts verwendet und mit Hilfe des Inertialsensors (44) die relative Verschiebung seiner Lage gegenüber dem Referenzpunkt berechnet.

3. Verfahren nach Anspruch 2, **dadurch gekennzeichnet, dass** ein Signal an einen Bediener (3) ausgegeben wird, wenn seit der letzten Aufnahme eines Referenzpunkts eine vorbestimmte Maximalzeit überschritten wird, durch welches der Bediener zur erneuten Aufnahme eines Referenzpunkts aufgefordert wird.

4. Verfahren nach Anspruch 3, **dadurch gekennzeichnet, dass** bei einer Referenzpunktaufnahme vorbestimmte Ortskoordinaten von einer von mehreren verschiedenen Stationen (11, 20...27) abgespeichert werden.

5. Verfahren nach einem der Ansprüche 2 bis 4, **dadurch gekennzeichnet, dass** das Bediengerät (4) an der jeweiligen Station (11, 20...27) durch eine Leseeinrichtung (43) einen RFID-Transponder (12, 30...37) mit einer Identifikationskennung der jeweiligen Station (11, 20...27) ausliest.

6. Mobiles Bediengerät (4) für eine Maschine (1) in einer technischen Anlage, das nach einem Verfahren nach einem der vorhergehenden Ansprüche betreibbar ist, wobei durch ein Ortungsverfahren die aktuelle Position des Bediengeräts ermittelt wird, wobei geprüft wird, ob sich das Bediengerät innerhalb eines vorbestimmten Bedienbereichs (2) der Maschine (1) befindet, und wobei das Bediengerät (4) nur innerhalb des Bedienbereichs zur Bedienung der Maschine freigeschaltet wird, **dadurch gekennzeichnet, dass** das Bediengerät einen Inertialsensor (44) aufweist und dazu ausgebildet ist, die Ortung des Bediengeräts zumindest zeitweise mit Hilfe des Inertialsensors durchzuführen.
